# EUROPÄISCHE PATENTSCHRIFT

(11) **EP 2 520 463 B1**
(45) Veröffentlichungstag und Bekanntmachung des Hinweises auf die Patenterteilung: **29.07.2015**
(21) Anmeldenummer: 12159111.9
(22) Anmeldetag: 12.03.2012
(51) Int. Cl.: B60R 5/04, E06B 9/42, B60J 1/20

(54) **Rollokassette und Rollosystem**
Roller blind box and roller blind system
Caisson de store à enrouleur et système de store à enrouleur

(30) Priorität: 18.03.2011 DE 102011005819
(43) Veröffentlichungstag der Anmeldung: 07.11.2012
(60) Teilanmeldung: 15165455.5
(73) Patentinhaber: BOS GmbH & Co. KG, 73760 Ostfildern (DE)
(72) Erfinder: Schleef, Thomas, 32457 Porta Westfalica (DE); Walter, Herbert, 73061 Ebersbach (DE)
(74) Vertreter: Patentanwälte Ruff, Wilhelm, Beier, Dauster & Partner

(56) Entgegenhaltungen:
- DE-A1- 10 108 216
- DE-A1- 19 527 068
- DE-A1- 19 707 674
- DE-B3-102005 042 832

## Beschreibung

### Anwendungsgebiet und Stand der Technik

Die Erfindung betrifft eine Rollokassette nach dem Oberbegriff von Anspruch 1.

Gattungsgemäße Rollokassetten sind aus dem Stand der Technik allgemein bekannt und werden bei Rollos in Kraftfahrzeugen, beispielsweise bei Beschattungsrollos oder Laderaumabdeckungen, verwendet, um die Rollobahn im aufgewickelten Zustand aufzunehmen, wenn diese nicht im Funktionszustand benötigt wird. Der Grundkörper solcher Rollokassetten, der als geschlitztes Hohlprofil ausgebildet ist, stellt fertigungstechnisch gegenüber einem geschlossenen und nachbearbeiteten Hohlprofil einen Vorteil dar, da hierdurch der Bearbeitungsaufwand verringert und die Kosten damit gesenkt werden können. Allerdings haben derartige geschlitzte Hohlprofile eine gegenüber geschlossenen Hohlprofilen deutlich verringerte Verwindungssteifigkeit, da ihre Kanten im Bereich des Schlitzes eine Relativverlagerung in Haupterstreckungsrichtung wenig Widerstand entgegensetzen. Bei bekannten Rollokassetten mit geschlitztem Hohlprofil ist zur Erzielung einer außenreichenden Verwindungssteifigkeit vorgesehen, dass vergleichsweise dicke Mittelbleche Verwendung finden, insbesondere solche mit Wandstärken größer 1,5 mm. Kleinere Wandstärken sind bislang als nachteilig angesehen worden, da sie eine ausreichende Verwindungssteifigkeit der Rollokassette nicht gewährleisten können.

Nachteilig an diesen aus dem Stand der Technik bekannten Rollokassetten mit hoher Wandungsstärke ist allerdings, dass deren Masse vergleichsweise groß ist. Zunehmend besteht jedoch das Bedürfnis, alle in einem Fahrzeug verwendeten Komponenten hinsichtlich ihrer Masse zu reduzieren, um die Effizienz der Fahrzeuge zu erhöhen. Eine solche Massenverringerung ist auch in Hinblick auf Rollokassetten gewünscht.

Aus der DE 19707674 A1 ist eine Rollokassette mit Endkappen bekannt, die als Halterung für eine Achskörper dienen und partiell in einen Grundkörper der Rollokassette eingeschoben sind.

Die DE 10108216 A1 zeigt ebenfalls eine Rollokassette, die über stirnseitig aufgeschobene kappenartige Gehäusebauteile verfügt.

### Aufgabe und Lösung

Aufgabe der Erfindung ist es daher, eine Rollokassette gattungsgemäßen Typs dahingehend weiterzubilden, dass diese bei ausreichender Verwindungssteifigkeit eine geringe Masse aufweist.

Erfindungsgemäß wird dies durch eine Rollokassette nach Anspruch 1 erreicht.

Erfindungsgemäß ist demnach vorgesehen, die Randbereiche der Kassette unmittelbar miteinander zu verbinden, wobei diese Verbindung über einen Verbindungssteg derart realisiert ist, dass der Verbindungssteg an mindestens einem Rand derart festgelegt ist, dass er sich nicht um eine gedachte, quer zur Haupterstreckungsrichtung ausgerichtete Achse verdrehen kann, da dies der gewünschten Verwindungssteifigkeit entgegenwirken würde. Eine Verhinderung der Drehbeweglichkeit an beiden durch den Verbindungssteg miteinander verbundenen Randbereichen ist von Vorteil, jedoch nicht zwingend erforderlich, da durch die genannte Drehfixierung des Verbindungsmittels an einem Randbereich eine Fixierung erreicht ist, die es gestattet, die Fixierung auf der gegenüberliegenden Seite einfacher auszugestalten. Als Randbereich im Sinne dieser Erfindung wird ein Bereich verstanden, der von dem Schlitz des Hohlprofils nicht weiter als 15 mm, vorzugsweise nicht weiter als 10 mm entfernt ist. Innerhalb dieses Randbereichs erfolgt zumindest zum Teil die Krafteinleitung vom Hohlprofil in den Verbindungssteg.

Durch die beschriebene Verbindung der gegenüberliegenden Randbereiche mittels eines Verbindungssteges kann eine deutliche Erhöhung der Verwindungssteifigkeit erzielt werden, so dass die Notwendigkeit der Verwendung sehr dicken Blechmaterials entfällt. Eine Massenreduktion ist daher erzielbar.

Erfindungsgemäß ist insbesondere in Hinblick auf eine einfache Montage vorgesehen, dass die Verbindungsmittel zur Verbindung des Verbindungssteges mit dem Hohlprofil einen im Randbereich des Gehäuses vorgesehenen und durch das Gehäuse gebildeten Aufnahmeschacht aufweisen, in den ein am Verbindungssteg vorzugsweise einstückig vorgesehener Steckabschnitt in Haupterstreckungsrichtung eingesteckt ist. Bei einer solchen Gestaltung wird somit durch eine passende Formgebung des Hohlprofils ein in Haupterstreckungsrichtung erstreckter Aufnahmeschacht gebildet, in den ein ebenfalls in Haupterstreckungsrichtung erstreckter Steckabschnitt des Verbindungssteges eingeschoben wird. Dabei können der Aufnahmeschacht und der Steckabschnitt einen über ihre Länge gleichbleibenden Querschnitt aufweisen. Vorteilhaft ist jedoch eine leichte Verjüngung des Steckabschnittes hin zu seinem distalen Ende, so dass bei vollständig eingestecktem Steckabschnitt auch eine kraftschlüssige Kopplung zwischen dem Gehäuse und dem Steckabschnitt in Hinblick auf eine Relativbewegung in Richtung der Haupterstreckungsrichtung erreicht wird. Bei dieser Gestaltung ist weiterhin von Vorteil, wenn beidseitig des Schlitzes derartige Aufnahmeschächte vorgesehen sind und am Verbindungssteg zwei zueinander im Wesentlichen parallele Steckabschnitte vorgesehen sind, die an den beiden gegenüberliegenden Randbereichen in diese Aufnahmeschächte eingeschoben werden.

Durch die oben genannte Verjüngung lässt sich eine Pressverbindung herstellen, die kraftschlüssig einem Herausziehen des Verbindungssteges auf den Aufnahmeschächten oder dem mindestens einem Aufnahmeschacht entgegenwirkt. Vorteilhaft ist eine formschlüssig wirkende Verhinderung des Herausziehens. Diese kann beispielsweise durch eine das Hohlprofil im Bereich des Aufnahmeschachtes und den Steckabschnitt durchdringende Verbindungsschraube, einen Verbindungsstift oder einen Verbindungsniet gebildet werden. Eine besonders vorteilhafte Ausgestaltung sieht jedoch vor, dass formschlüssig wirkende Sicherungsmittel am Hohlprofil und dem Steckabschnitt vorgesehen sind, insbesondere zur Bildung einer Schnappverbindung, mittels derer der Steckabschnitt im Aufnahmeschacht gegen Herausziehen gesichert ist. Diese Sicherungsmittel sind vorzugsweise derart ausgebildet, dass sie bereits durch Einstecken des Steckabschnitts in den Aufnahmeschacht in einen Sicherungszustand gelangen. Die Funktionsweise kann dabei die eines Widerhakens sein. Dies führt zu einer sehr einfachen Montage, da lediglich der Verbindungssteg und der an ihm angeformte Steckabschnitt seitlich an das Hohlprofil herangeführt werden muss und in dieses eingeschoben werden muss, um die gewünschte Verbindung zu schaffen. Eine konkrete Ausgestaltung des Sicherungsmittels könnte beispielsweise vorsehen, dass im Hohlprofil Aussparungen oder Vertiefungen an der Innenseite des Aufnahmeschachtes vorgesehen sind, in die eine Schnappzunge, die am Steckabschnitt vorgesehen ist, einschnappt, sobald der Steckabschnitt ausreichend weit in den Aufnahmeschacht eingeführt ist. Eine umgekehrte Gestaltung, bei der die Ausnehmung oder die Vertiefung im Steckabschnitt vorgesehen ist und bei der die Schnappzunge am Hohlprofil vorgesehen ist, ist gleichermaßen zweckmäßig.

Zur Ausbildung des Aufnahmeschachtes ist vorzugsweise vorgesehen, dass im an den Schlitz angrenzenden Randbereich des Hohlprofils beidseitig des Schlitzes das Hohlprofil umgefalzt ist und dadurch beidseitig schlitzartige Aufnahmeschächte bildet.

Der Verbindungssteg kann derart ausgebildet sein, dass er lediglich die Verbindung zwischen den beiden gegenüberliegenden Randbereichen schafft, die Stirnenden des Hohlprofils jedoch unverschlossen lässt. Es kann jedoch auch zweckmäßig sein, wenn der Verbindungssteg insbesondere einstückig mit einer das Hohlprofil stirnseitig abschließenden Stirnkappe ausgebildet ist, welche das offene Stirnende des Gehäuses zumindest zum überwiegenden Teil verschließt. Bei einer solchen Gestaltung übernimmt der Verbindungssteg somit eine Doppelfunktion. Er ist Träger der an ihr befestigten oder angeformten stirnseitigen Wandung des Gehäuses und gleichzeitig Stabilisator des Gehäuses gegen Verwindungen. Die Stirnwandung kann gleichzeitig auch dem Zweck dienen, Lagerstelle für die innerhalb des Gehäuses drehbar gelagerte Rollowelle zu sein.

Bei einer erfindungsgemäßen Rollokassette handelt es sich vorzugsweise um eine Rollokassette aus Metall, insbesondere aus einem Metallblech konstanter Dicke. Diese Dicke beträgt vorzugsweise zur Erzielung einer geringen Masse maximal 1,5 mm, insbesondere vorzugsweise maximal 1 mm. Wie oben verdeutlicht, kann diese geringe Wandungsstärke des Hohlprofils aufgrund der durch den Verbindungssteg erzielbaren Verwindungssteife ausreichen. Vorzugsweise ist auch der Verbindungssteg selbst, auch wenn er als separates Bauteil vorgesehen ist, aus Metall gefertigt. Auch hierbei handelt es sich vorzugsweise um ein Blechteil, welches durch Stanzen oder dergleichen in die gewünschte Form gebracht wird, so dass beispielsweise hierdurch die Steckabschnitte oben beschriebener Art gebildet werden.

Die erfindungsgemäße Rollokassette findet bei einem erfindungsgemäßen Rollo Verwendung, welches insbesondere zur Verwendung in einem Fahrzeug vorgesehen und ausgebildet ist. Dabei umfasst dieses Rollo neben der erfindungsgemäßen Rollokassette auch noch eine in der Rollokassette auch drehbar gelagerte Rollowelle sowie eine auf der Rollowelle aufgewickelte und von der Rollowelle abwickelbare Rollobahn.

### Kurzbeschreibung der Zeichnungen

Weitere Vorteile und Aspekte der Erfindung ergeben sich außer aus den Ansprüchen auch aus der nachfolgenden Beschreibung bevorzugter Ausführungsbeispiele der Erfindung, welche im Weiteren erläutert sind.

Die Fig. 1 a und 1 b dienen lediglich der Erläuterung und stellen keine Ausführungsformen der Erfindung dar.

Es zeigen:
- Fig. 1a und 1b: eine Ausführungsform einer Rollokassette mit separatem Verbindungssteg,
- Fig. 2a und 2b: eine erste Ausführungsform einer erfindungsgemäßen Rollokassette mit separatem Verbindungssteg,
- Fig. 3a und 3b: eine zweite Ausführungsform einer erfindungsgemäßen Rollokassette, die eine Variante zur Ausführungsform der Fig. 4a und 4b darstellt.

### Detaillierte Beschreibung der Ausführungsbeispiele

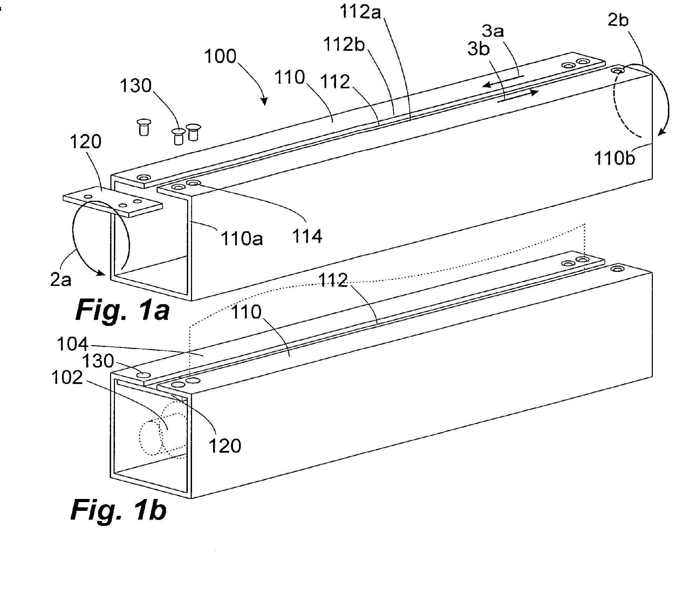

Fig. 1 a und 1 b zeigen in schematischer Darstellung eine Rollokassette. Diese Rollokassette 100 umfasst primär ein offenes Hohlprofil 110, welches als gebogenes Blechteil ausgebildet ist. Die Wandungsstärke dieses Hohlprofils liegt bei etwa 1 mm. Durch die Ausgestaltung als offenes Hohlprofil ist dieses einfach und kostengünstig herzustellen. Allerdings neigt ein solches offenes Hohlprofil dazu, bei einer durch die Pfeile 2a, 2b verdeutlichten Momentenbeaufschlagung stark zu verwinden. Die daraus resultierende Bewegung in Längsrichtung des Hohlprofils 110 ist anhand der Pfeile 3a und 3b verdeutlicht. Um dies zu verhindern, sind beidseitig an den Stirnenden 110a, 110b des Hohlprofils 110 Verbindungsstege 120 vorgesehen, wobei in den Ausführungsbeispielen der Fig. 1 bis 5 zur Verdeutlichung stets nur der jeweilige Verbindungsstege auf der linken Seite dargestellt sind.

Im Falle der Ausgestaltung der Fig. 1a und 1b handelt es sich bei dem Verbindungssteg 120 um einen einfachen Blechstreifen. Dieser ist, wie in Fig. 1b dargestellt, im montierten Zustand innenseitig im Bereich eines Schlitzes 112 des Hohlprofils 110 vorgesehen und mit den Randbereichen 112a, 112b beidseitig des Schlitzes mittels Nieten 130 verbunden. Dabei sind zumindest an einem Randbereich 112a zwei Bohrungen 114a für diese Nieten 130 vorgesehen, so dass nach der in Fig. 1b dargestellten erfolgten Befestigung der Verbindungssteg 120 fest und insbesondere auch drehfest mit dem Randbereich 112a verbunden ist. Am Randbereich 112b auf der gegenüberliegenden Seite ist beim Ausführungsbeispiel der Fig. 1a und 1b nur ein Niet 130 vorgesehen, der das Hohlprofil 110 mit dem Verbindungssteg 120 verbindet. Selbstverständlich kann zur Verbesserung der Krafteinleitung auch hier ein zweiter Niet vorgesehen sein.

Das somit hergestellte Hohlprofil zur Aufnahme einer in Fig. 1b dargestellten Rollowelle 102, die dem Zweck des Aufwickelns einer Rollobahn 104 dient, ist preisgünstig herzustellen und ausgesprochen stabil. Es stellt daher eine preisgünstige Alternativ zu einem originär geschlossenen Hohlprofil dar, in welches der Austrittsspalt nach Herstellung des Hohlprofils eingebracht wird.

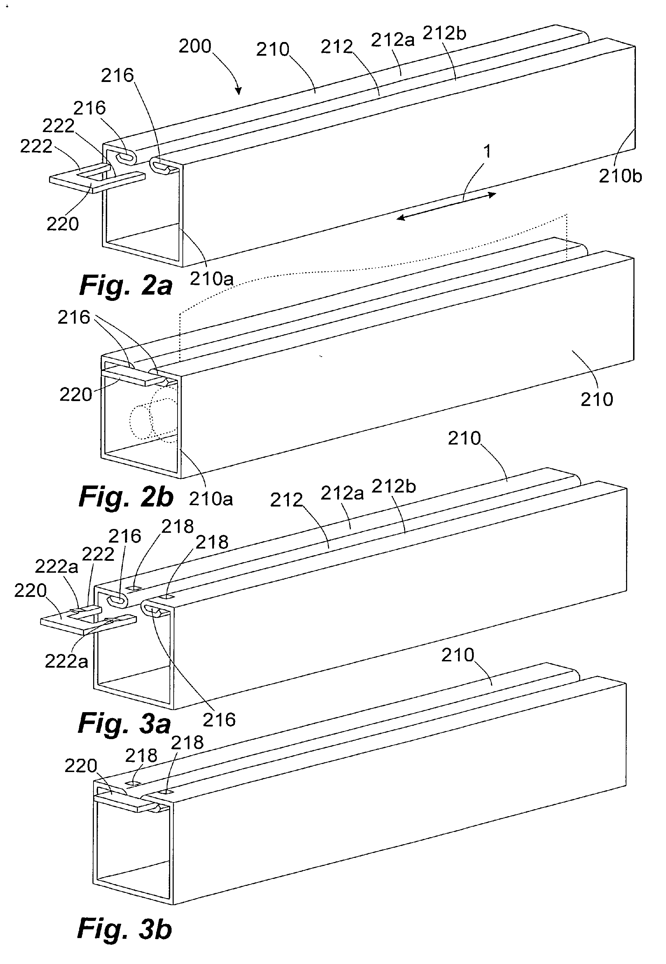

Die Fig. 2a und 2b zeigen eine erste Ausführungsform einer erfindungsgemäßen Rollokassette 200. Bei dieser finden keine vom Hohlprofil 210 und dem Verbindungssteg 220 separaten Verbindungsmittel Anwendung. Stattdessen ist das Hohlprofil 210 im Bereich des Schlitzes 212 jeweils in beiden Randbereichen 212a, 212b umgefalzt, so dass sich hierdurch an beiden Stirnseiten 210a, 210b je zwei Aufnahmeschächte 216 bilden. Korrespondierend hierzu ist der Verbindungssteg 220 mit zwei Steckabschnitten 222 versehen, die sich in etwa in der Haupterstreckungsrichtung 1 der Rollokassette 200 erstrecken und die eine sich zu ihrem distalen Ende leicht verjüngende Form aufweisen. Bei dieser Ausgestaltung ist vorgesehen, dass diese in etwa U-förmigen Verbindungsstege 220 beidseitig des Schlitzes 212 in die Aufnahmeschächte 216 eingeschoben werden. Dabei sind die Aufnahmeschächte 216 und die Einsteckabschnitte 222 derart aufeinander angepasst, dass sich eine kraftschlüssige haltende Pressverbindung ergibt, die einer Verwindung der Rollokassette 200 entgegensteht. Um eine ausreichende Pressverbindung herzustellen, ist es jedoch erforderlich, mit erheblichem Kraftaufwand die Steckabschnitte 222 in die Aufnahmeschächte 216 hineinzudrücken.

Die Ausgestaltung der Fig. 3a und 3b ist hierzu verwandt, weist jedoch Steckabschnitte 222 auf, an deren Oberseite Rastverdickungen 222a vorgesehen sind. Diese weisen an ihrer nach außen weisenden Seite eine senkrechte Flanke und auf ihrer - bezogen auf die Fig. 5a - in Richtung der Aufnahmeschächte 216 zeigenden Seite langgestreckte Schrägen auf. Korrespondierend hierzu sind in den Randbereichen 212a, 212b beidseitig des Schlitzes 212 Ausnehmungen 218 vorgesehen, in die die Rastverdickungen 222a einrücken können.

Bei der Montage der Rollokassette gemäß der Fig. 3a und 3b kann daher ein erheblich geringerer Kraftaufwand ausreichen als bei der Montage der Ausgestaltung der Fig. 4a und 4b. Sobald der Verbindungssteg 220 ausreichend weit mit seinen beiden Steckabschnitten 222 in die Aufnahmeschächte 216 eingeschoben ist, schnappen die Rastverdickungen 222a in die Ausnehmungen 218 ein und verhindern so in Art eines Widerhakens wirksam, dass eine Relativbewegung der Randbereiche 212a und 212b gegeneinander in entgegengesetzte Richtungen möglich ist. Wiederum ist eine hohe Verwindungssteife der Rollokassette 200 die Folge.

## Patentansprüche

1. Rollokassette (200) zur Aufnahme einer Rollowelle (102) und einer in einem Stauzustand auf der Rollowelle aufgewickelten und in einen Funktionszustand durch einen Austrittsspalt (212) der Rollokassette (200) von der Rollowelle in einer Längsrichtung abziehbaren Rollobahn (104), mit einem Gehäuse, welches ein durchgehend geschlitztes und sich in einer Haupterstreckungsrichtung (1) der abgezogenen Rollobahn quer zur Längsrichtung erstreckendes Hohlprofil (210) aufweist, dessen Schlitz (212) den Austrittsspalt (212) der Rollokassette bildet,
wobei zwei sich gegenüberliegende und in Erstreckungsrichtung erstreckte Randbereiche (212a, 212b) beidseitig des Schlitzes (212) miteinander jeweils im Bereich zweier gegenüberliegender Stirnenden (210a, 210b) des Hohlprofils durch einen Verbindungssteg (220) verbunden sind, wobei dieser Verbindungssteg (220) mit mindestens einem der Randbereiche (212a, 212b) mittels Verbindungsmitteln (222, 216) verbunden ist,
die einer Drehbeweglichkeit des Verbindungsstegs (220) gegenüber dem Randbereich (212a, 212b) formschlüssig entgegenwirken, **dadurch gekennzeichnet, dass** die Verbindungsmittel (220) einen im Randbereich (212a, 212b) am Gehäuse vorgesehenen und durch das Gehäuse gebildeten Aufnahmeschacht (216) aufweisen, in den ein am Verbindungssteg (220) vorgesehener Steckabschnitt (222) in axialer Richtung (1) eingesteckt ist.

2. Rollokassette (200) nach Anspruch 1,
**dadurch gekennzeichnet, dass**
der Steckabschnitt (222) und der Aufnahmeschacht (216) zur Ausbildung einer Pressverbindung ausgebildet sind.

3. Rollokassette (200) nach Anspruch 1 oder 2,
**dadurch gekennzeichnet, dass**
formschlüssig wirkende Sicherungsmittel (222a, 218) vorgesehen sind, insbesondere zur Bildung einer Schnappverbindung, mittels derer der Steckabschnitt (222) im Aufnahmeschacht (216) gegen Herausziehen gesichert ist.

4. Rollokassette nach einem der vorstehenden Ansprüche,
**dadurch gekennzeichnet, dass**
der Verbindungssteg insbesondere einstückig mit einer das Gehäuse stirnseitig abschließenden Stirnkappe ausgebildet ist, die das offene Stirnende des Hohlprofils zumindest zum überwiegenden Teil verschließt.

5. Rollokassette nach einem der vorstehenden Ansprüche,
**dadurch gekennzeichnet, dass**
das Hohlprofil aus Metall, insbesondere aus einem Metallblech konstanter Dicke gefertigt ist, wobei die Dicke vorzugsweise maximal 1,5 mm beträgt, vorzugsweise von maximal 1 mm.

6. Rollokassette nach einem der vorstehenden Ansprüchen,
**dadurch gekennzeichnet, dass**
der Verbindungssteg aus Metall gefertigt ist.

7. Rollo, insbesondere zur Verwendung in einem Fahrzeug, mit
- einem Rollokassette (200) und
- einer in der Rollokassette drehbar gelagerten Rollowelle (102) und
- einer auf der Rollowelle aufgewickelten und von der Rollowelle abwickelbaren Rollobahn (104),
**dadurch gekennzeichnet, dass** die Rollokassette (200) nach einem der vorstehenden Ansprüche ausgebildet ist.

## Claims

1. Roller blind box (200) for holding a roller blind shaft (102) and a roller blind web (104) which in a stowed condition is wound onto the roller blind shaft and is adapted to be drawn in a longitudinal direction off the roller blind shaft into a functional condition through an exit slot (212) of the roller blind box (200), having a housing which has a hollow section (210) slotted throughout and extending in a main extension direction (1) of the drawn out roller blind web transversely to the longitudinal direction, with the slot (212) therein constituting the exit slot (212) of the roller blind box, wherein two mutually opposite edge regions (212a, 212b) extending in the extension direction on both sides of the slot (212) are interconnected respectively in the region of two opposite ends (210a, 210b) of the hollow section by a connecting bridge (220), with this connecting bridge (220) being connected to at least one of the edge regions (212a, 212b) by means of connecting means (222, 216), to counteract rotational mobility of the connecting bridge (220) in relation to the edge region (212a, 212b) in a positive locking manner,
**characterized in that** the connecting means (220) incorporate a receiving duct (216) provided on and formed by the housing in the edge region (212a, 212b), into which duct an insertion piece (222) provided on the connecting bridge (220) is inserted in an axial direction (1).

2. Roller blind box (200) according to claim 1, **characterized in that** the insertion piece (222) and the receiving duct (216) are designed to create a press-fit.

3. Roller blind box (200) according to claim 1 or 2, **characterized in that** positive locking securing means (222a, 218) are provided, in particular to create a snap connection by means of which the insertion piece (222) is secured in the receiving duct (216) to prevent withdrawal.

4. Roller blind box according to any one of the preceding claims, **characterized in that** the connecting bridge is in particular made in one piece with an end cap closing off the end of the housing and at least to a large extent closing the open end of the hollow section.

5. Roller blind box according to any one of the preceding claims, **characterized in that** the hollow section is made of metal, in particular made of a metal sheet of constant thickness, said thickness being preferably at maximum 1.5 mm, more preferably at maximum 1 mm.

6. Roller blind box according to any one of the preceding claims, **characterized in that** the connecting bridge is made of metal.

7. Roller blind, in particular for use in a vehicle, having
- a roller blind box (200) and
- a roller blind shaft (102) rotatably mounted inside the roller blind box and
- a roller blind web (104) which is wound onto the roller blind shaft and which can be wound off the roller blind shaft,
**characterized in that** the roller blind box (200) is designed according to any one of the preceding claims.

## Revendications

1. Caisson de store à enrouleur (200) destiné à recevoir un arbre de store (102) et une toile de store (104) enroulée sur l'arbre de store dans un état de rangement et extractible de l'arbre de store dans une direction longitudinale à travers une fente de sortie (212) du caisson de store à enrouleur (200) dans un état fonctionnel, avec un boîtier qui présente un profilé creux (210) fendu en continu et s'étendant dans la direction d'extension principale (1) de la toile de store extraite transversalement à la direction longitudinale, dont la fente (212) forme la fente de sortie (212) du caisson de store à enrouleur, dans lequel deux zones de bord (212a, 212b) opposées et s'étendant dans la direction d'extension de part et d'autre de la fente (212) sont reliées l'une à l'autre par une nervure de liaison (220) respectivement dans la région de deux extrémités frontales opposées (210a, 210b) du profilé creux, dans lequel cette nervure de liaison (220) est reliée à au moins une des zones de bord (212a, 212b) au moyen de moyens de liaison (222, 216), qui s'opposent par emboîtement à une mobilité rotative de la nervure de liaison (220) par rapport à la zone de bord (212a, 212b), **caractérisé en ce que** les moyens de liaison (220) présentent un canal de réception (216) prévu dans la zone de bord (212a, 212b) sur le boîtier et formé à travers le boîtier, dans lequel une partie d'engagement (222) prévue sur la nervure de liaison (220) est engagée en direction axiale (1).

2. Caisson de store à enrouleur (200) selon la revendication 1, **caractérisé en ce que** la partie d'engagement (222) et le canal de réception (216) sont configurés de façon à former un assemblage à ajustement serré.

3. Caisson de store à enrouleur (200) selon la revendication 1 ou 2, **caractérisé en ce qu'**il est prévu des moyens de fixation agissant par emboîtement (222a, 218), en particulier pour la formation d'un assemblage à déclic, au moyen desquels la partie d'engagement (222) est bloquée dans le canal de réception (216) contre une extraction.

4. Caisson de store à enrouleur selon l'une quelconque des revendications précédentes, **caractérisé en ce que** la nervure de liaison est formée en particulier en une seule pièce avec une coiffe d'extrémité fermant le boîtier à son extrémité frontale, qui ferme l'extrémité frontale ouverte du profilé creux au moins dans la majeure partie.

5. Caisson de store à enrouleur selon l'une quelconque des revendications précédentes, **caractérisé en ce que** le profilé creux est fabriqué en métal, en particulier en une tôle métallique d'épaisseur constante, dans lequel l'épaisseur vaut de préférence au maximum 1,5 mm, et de préférence au maximum 1 mm.

6. Caisson de store à enrouleur selon l'une quelconque des revendications précédentes, **caractérisé en ce que** la nervure de liaison est fabriquée en métal.

7. Store à enrouleur, à utiliser en particulier dans un véhicule, avec
- un caisson de store à enrouleur (200) et
- un arbre de store (102) monté de façon rotative dans le caisson de store à enrouleur, et
- une toile de store (104) enroulée sur l'arbre de store et déroulable de l'arbre de store,
**caractérisé en ce que** le caisson de store à enrouleur (200) est configuré selon l'une quelconque des revendications précédentes.
